(19) **Europäisches Patentamt**

**European Patent Office**

**Office européen des brevets**

(11) **EP 1 052 009 B1**

(12) **EUROPÄISCHE PATENTSCHRIFT**

(45) Veröffentlichungstag und Bekanntmachung des Hinweises auf die Patenterteilung:
**20.04.2005 Patentblatt 2005/16**

(51) Int Cl.[7]: **B01D 53/94**, F01N 3/20

(21) Anmeldenummer: **99113224.2**

(22) Anmeldetag: **08.07.1999**

(54) **Verfahren zur Behandlung von Abgasen einer Brennkraftmaschine unter Verwendung von Harnstoff**

Process for treating exhaust gases from an internal combustion engine by using urea

Procédé pour traiter les gaz d'échappement d'un moteur à combustion interne en utilisant de l'urée

(84) Benannte Vertragsstaaten:
**AT BE CH CY DE DK ES FI FR GB GR IE IT LI LU MC NL PT SE**

(30) Priorität: **25.03.1999 DE 19913462**

(43) Veröffentlichungstag der Anmeldung:
**15.11.2000 Patentblatt 2000/46**

(73) Patentinhaber: **MAN NUTZFAHRZEUGE AG**
**80995 München (DE)**

(72) Erfinder: **Döring, Andreas, Dipl.-Ing.**
**90403 Nürnberg (DE)**

(56) Entgegenhaltungen:
**EP-A- 0 896 831       DE-C- 19 740 702**
**US-A- 5 809 774**

**Beschreibung**

Die Erfindung bezieht sich auf ein Verfahren gemäß dem Gattungsbegriff des Patentanspruches 1.

Zur Reduktion von $NO_x$ in Abgasen von Brennkraftmaschinen ist es bekannt, dem Abgasstrom dosiert Harnstoff beizumischen. Durch die Hydrolyse des Harnstoffes entsteht $CO_2$ und $NH_3$, wobei $NH_3$ in der Lage ist Stickoxide selektiv zu Stickstoff zu reduzieren. Verwendet wird dazu üblicherweise, wie aus der DE-C-197 40 702 bekannt, eine Anordnung, bei der ein Hydrolyse-Reaktor und ein SCR-Katalysator stromabwärts gesehen im Abgasstrang hintereinander angeordnet sind. Das dort gezeigte Beispiel weist als Besonderheit einen Bypass auf, in dem ebenfalls eine Kombination aus Hydrolyse-Reaktor zur Harnstoffhydrolyse und Absorptions-Katalysator zur $NO_x$-Absorption angeordnet ist. Welcher der beiden Abgaswege jeweils durch Ansteuerung einer Klappe im Hauptstrang genutzt wird, hängt dabei vom Betriebszustand der Brenrtkraftmaschine ab.

Weiterhin ist es aus der US-A- 5 809 774 bekannt, den Hydrolyse-Reaktor mittels des Abgasstromes oder mit externen Mittel, z.B. elektrisch, zu beheizen.

Aus der EP-A-0 896 831 ist es weiterhin bekannt, den Hydrolyse-Reaktor katalytisch zu beschichten.

Die EP-A-0 835 684 beschreibt darüber hinaus, dass durch die Anwesenheit eines ersten platinhaltigen Katalysators im Abgasstrom das dort vorhandene NO durch den im Abgas vorhandenen Restsauerstoff zu $NO_2$ aufoxidiert werden kann, das wiederum in einem nachfolgenden zweiten Katalysator zu $N_2$ reduziert wird.

Schwierigkeiten bei den vorstehend angesprochenen Verfahren bereitet die homogene Verteilung und Dosierung, sowie die vollständige Zersetzung des Harnstoffes im Abgas. Ein direkter Einsatz von $NH_3$ zur Reduktion der Stickoxide des Abgases ist bei Fahrzeugen nicht möglich, da Ammoniak unter das Gefahrgut fällt.

Aufgabe der Erfindung ist es, Harnstoff in einem Reaktor möglichst vollständig in Ammoniak zu überführen und die Menge von Ammoniak der Stickoxidkonzentration im Abgas anzupassen.

Gelöst wird diese Aufgabe erfindungsgemäß durch den kennzeichnenden Merkmale des Patentanspruches 1.

Durch, daß man nur einen Teilstrom vom Abgas für die Hydrolyse abzweigt, ist es möglich, die Verweilzeit des Harnstoffes im Reaktor wesentlich auszudehnen, so daß genügend Zeit für die Spaltung in $NH_3$ und $CO_2$ verbleibt.

Vorteilhafte Verfahrensmerkmale zur Umsetzung des Harnstoffes im Reaktor und zur Dosierung des $NH_3$ im Abgas kann man den Unteransprüchen 2 bis 4 entnehmen.

Ein weiteres vorteilhaftes Verfahrensmerkmal zeichnet sich nach Anspruch 5 durch die Kombination des Reaktors mit einem Katalysator zur Umwandlung von NO in $NO_2$ aus. $NO_2$ reagiert in einem stromab nachgeschalteten SCR-Katalysator wesentlich schneller mit dem im Reaktor gebildeten $NH_3$ und wird dabei zu $N_2$ reduziert.

Die Ansprüche 6 bis 17 beinhalten vorteilhafte Vorrichtungsmerkmale zur Durchführung des Verfahrens nach den Ansprüchen 1 bis 5.

Das erfindungsgemäße Verfahren besteht darin, die Hydrolyse von Harnstoff im Reaktor so zu verbessern, daß möglichst viel in $NH_3$ umgesetzt wird.

Zu diesem Zweck wird nicht der gesamte Abgasstrom durch den Reaktor geschickt, sondern nur ein Teilstrom, so daß genügend Verweilzeit im Reaktor verbleibt, um den Harnstoff unter der Wärmeeinwirkung des Abgases und dem aus der Verbrennung im Abgas enthaltenen Wasserdampf in $NH_3$ und $CO_2$ umzusetzen.

Zur Verbesserung der Umsetzung ist es vorteilhaft, den Reaktor katalytisch zu beschichten.

Vorrichtungen zur Durchführung des Verfahrens sind in Zeichnungen dargestellt. Es zeigt:

Fig. 1 einen Längsschnitt durch einen Reaktor mit Abzweigung eines Teilstromes vom Abgasstrang

Fig. 2 einen Längsschnitt durch einen Reaktor mit Einbindung in den Abgasstrang

Fig. 3 einen Schnitt III-III durch den Reaktor

Fig. 4 einen Längsschnitt durch den in den Abgasstrang integrierten Reaktor großer Länge

Fig. 5 einen Längsschnitt durch den Abgasstrang mit mehreren in Reihe angeordneten Reaktoren und partieller Rückführung eines mit $NH_3$ angereicherten Teilstromes in den Abgasstrang

Fig. 6 einen Längsschnitt durch den Abgasstrang mit Reaktor und in den Reaktor integrierten Gleichstromwärmetauscher

Fig. 7 einen Längsschnitt durch den Abgasstrang mit Reaktor und einem in den Reaktor integrierten Kreuzstromwärmetauscher

Fig. 8 einen Längsschnitt durch den Abgasstrang mit Kreuzstromwärmetauscher zwischen zwei in Reihe geschalteten Reaktoren

Fig. 9 einen Längsschnitt durch ein Gehäuse im Abgasstrang mit darin integriertem Reaktor und parallel dazu geschalteten Katalysator

Fig. 10 einen Querschnitt X-X mit zentrisch angeordnetem Reaktor und diesen umgebenden Katalysator

Fig. 11     eine Regelvorrichtung für die vom Abgasstrang abgezweigte Teilmenge zum Reaktor

Fig. 12     eine durch Strömungskräfte selbststeuernde R-egelvonichtung für die abgezweigte Teilmenge

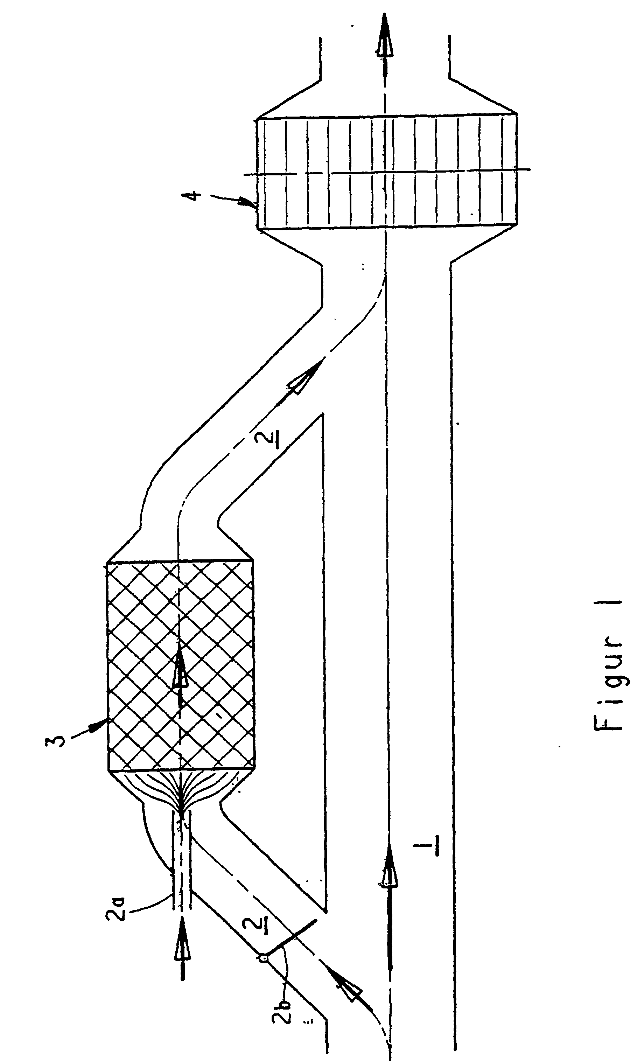

Figur 1 zeigt ein Ausführungsbeispiel für die Durchführung des erfindungsgemäßen Verfahrens zur Hydrolyse von Harnstoff bzw. wässriger Harnstofflösung und einer dosierten Zugabe zu einem Teilstrom 2 des Abgasstranges 1. Der allgemeine Erfindungsgedanke ist darin zu sehen, daß die Zugabe des Reduktionsmittels über ein Rohr 2a in den Teilstrom 2 erfolgt, der vom Abgasstrang 1 abzweigt. Die Menge des abgezweigten Teilstromes 2 kann durch eine Drosselklappe 2b geregelt werden. Dadurch, daß nur ein Teilstrom 2 durch einen Reaktor 3 geführt wird, verbleibt für die Hydrolyse eine ausreichende Verweilzeit. So ist beispielsweise ab einer Raumgeschwindigkeit von ca. $60000\frac{1}{h}$ bei Temperaturen um 350° C keine quantitative Umsetzung des Harnstoffs mehr möglich. Unter Raumgeschwindigkeit versteht man hier den Quotienten aus dem Abgasvolumenstrom und dem Katalysatorvolumen des Reaktors 3. Dies würde bedeuten, daß für die Reduktion von $NO_x$ im Abgasstrang von Nutzfahrzeugen mit einem üblichen Abgasvolumenstrom von ca. 1700 $Nm^3/h$ ein Katalysatorvolumen von ungefähr 281 notwendig wäre, das kaum unterzubringen ist. Dadurch, daß die Dosierung des Harnstoffes in den Teilstrom 2 erfolgt, kann die Verweilzeit zur Umwandlung in $NH_3$ und $CO_2$ im Reaktor 3 wesentlich gesteigert und die Vollständigkeit dieser Umwandlung außerordentlich verbessert werden Nach dem Durchlaufen des Reaktors 3 wird der abgezweigte und nun mit $NH_3$ beladene Teilstrom 2 wieder dem Abgasstrang 1 zugeführt. Stromab durchläuft das mit $NH_3$ beladene Abgas einen für die selektive katalytische Reduktion ausgebildeten sogenannten SCR Katalysator 4, in dem die Umsetzung des $NO_x$ mit $NH_3$ zu $N_2$ und $H_2O$ erfolgt.

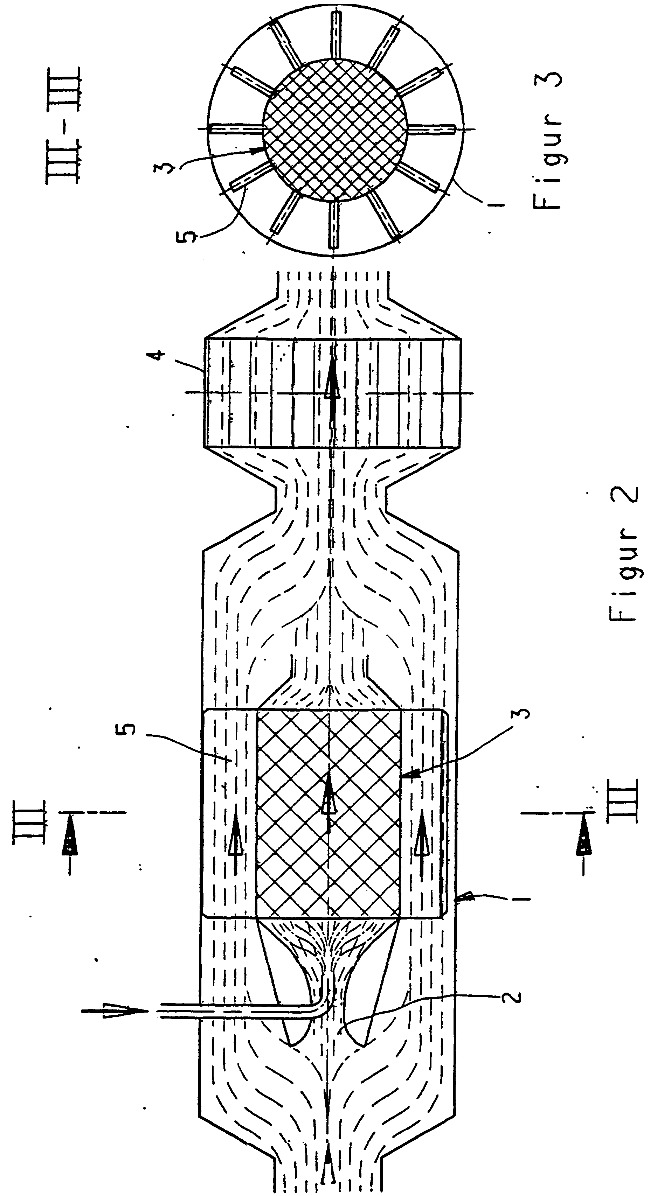

Eine weitere Verbesserung der Vorrichtung zur Durchführung des erfindungsgemäßen Verfahrens ist in Figur 2 gezeigt. Die Verdampfung der Harnstofflösung und die endotherme Hydrolyse des Harnstoffes entziehen dem Abgas viel Wärme. Um den Teilstrom 2 in einer für die Hydrolyse im Reaktor 3 optimalen Größenordnung zu halten wird dieser direkt in den Abgasstrang 1 eingebunden. Der Reaktor wird an seiner Umfangsfläche mit Heizrippen 5 versehen, so daß der Reaktor von außen zusätzlich mit Wärme aus dem Abgas beaufschlagt wird. Der für die Hydrolyse erforderliche Wärmebedarf ist also unabhängig vom Teilstrom 2. Hinter dem Reaktor 3 wird der Teilstrom 2 wieder dem Abgasstrang 1 zugemischt und durch den SCR-Katalysator 4 zur Reduktion der Stickoxide geleitet.

Figur 3 zeigt im Querschnitt III-III den Reaktor 3, welcher vollständig in den Abgasstrang 1 eingebaut ist. An seiner Umfangsfläche weist der Reaktor 3 Heizrippen 5 auf, durch welche Wärme aus dem Abgas auf den Reaktor 3 übertragen wird.

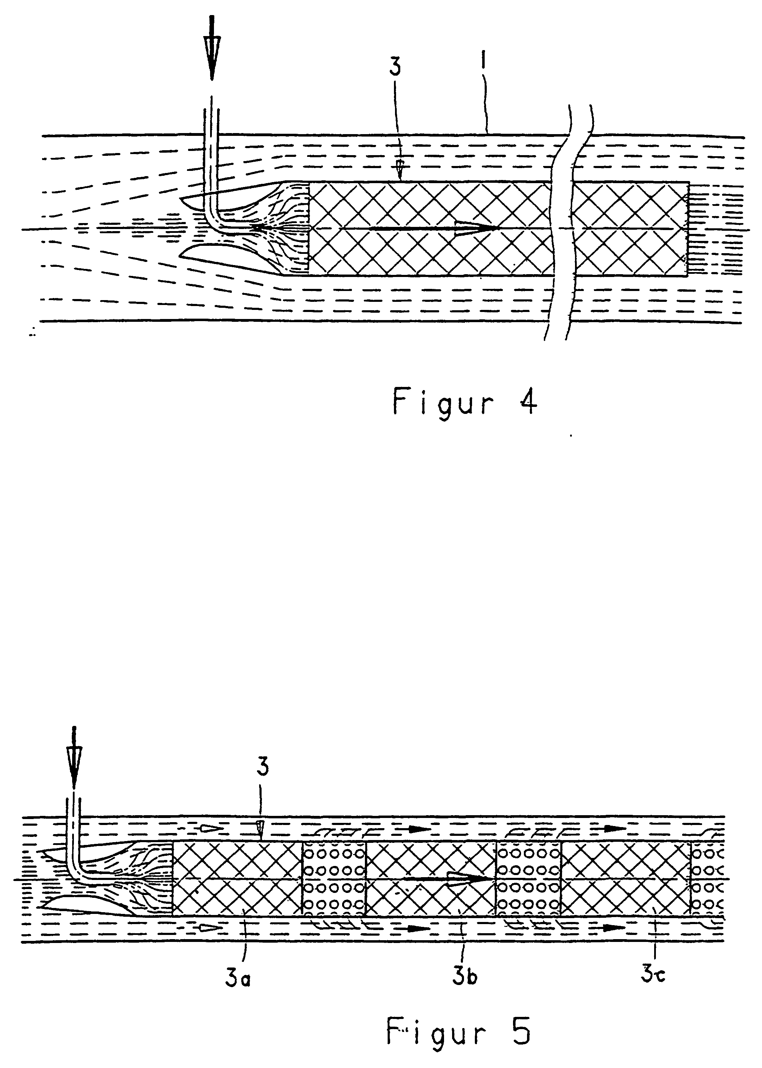

Figur 4 zeigt eine weitere Möglichkeit den Reaktor 3 zu verkleinern und direkt in den Abgasstrang 1 zu integrieren. Durch das hohe Verhältnis von Länge zu Durchmesser von mehr als 10 wird eine lange Verweilzeit und zugleich eine große wärmetauschende Oberfläche auf der äußeren Umfangsfläche des Reaktors 3 erzielt. Der stromab angeordnete SCR Katalysator ist hier nicht dargestellt.

Die Verringerung der Gasgeschwindigkeit im Teilstrom kann im stark instationären Betrieb zu Problemen führen. Diese werden durch die unterschiedlichen Gaslaufzeiten im Haupt- und Teilstrom verursacht, so daß die Reaktion des Hauptstroms auf Laständerungen der Brennkraftmaschine deutlich schneller erfolgt als die des Teilstroms. Das hat zur Folge, daß die vom Teilstrom zur Verfügung gestellte Ammoniakmenge immer der vom Hauptstrom benötigten hinterher hinkt. Um das Anspruchsverhalten des Reaktors 3 zu verbessern wird dieser nach Figur 5 deshalb in kleinere Reaktoreinheiten 3a, 3b, 3c aufgeteilt und gasförmige Hydrolyseprodukte bereits vor dem Ende des Reaktors, nämlich zwischen den Einheiten dem Hauptstrom zugemischt.

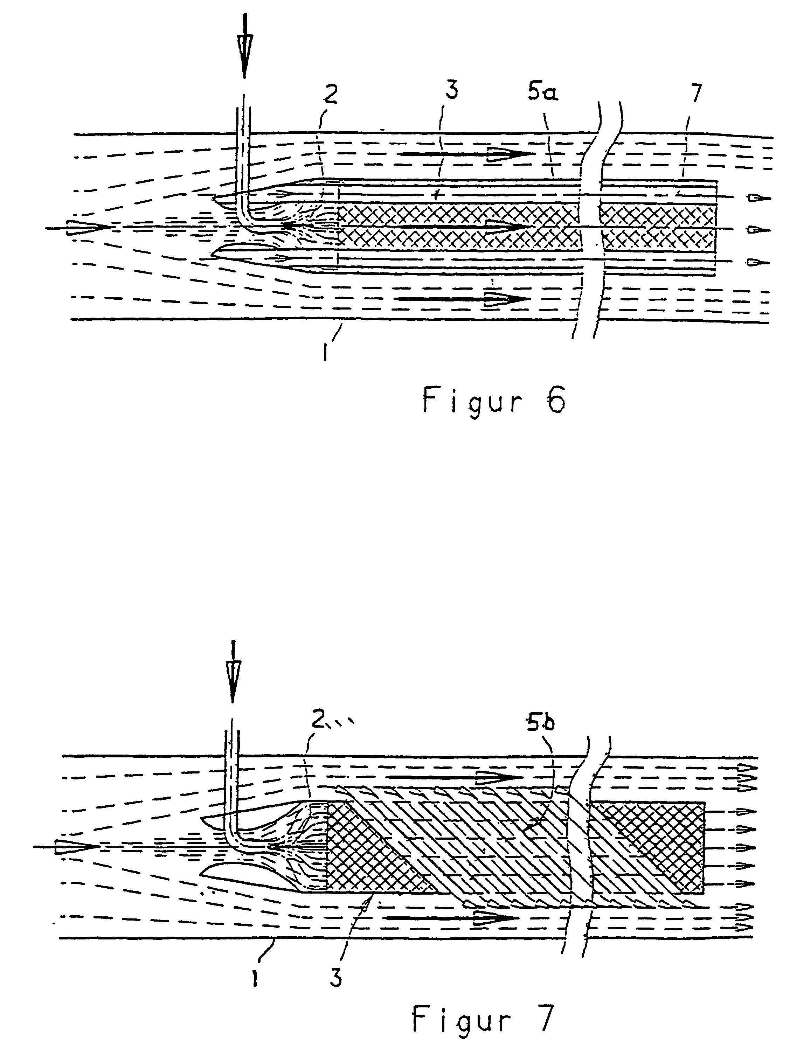

Um die vom Abgasstrang 1 auf den Teilstrom 2 übertragbare Wärme zu steigern kann ein Wärmetauscher nach Fig. 6 direkt in den Reaktor 3 integriert werden. Der Wärmetauscher ist als Gleichstromwärmetauscher ausgebildet und besteht aus Bohrungen 5a die den Reaktor 3 konzentrisch zu seiner Achse in Längsrichtung durchdringen.

Nach Figur 7 kann der Wärmetausch zwischen dem Abgasstrang 1 und dem Teilstrom 2 im Reaktor 3 durch einen Kreuzstromwärmetauscher erfolgen. Dieser ist in den Reaktor 3 integriert und besteht aus Kanälen 5b die den Reaktor 3 schräg zum Teilstrom 2 durchdringen und Wärme aus dem Abgasstrang 1 auf den Teilstrom 2 übertragen.

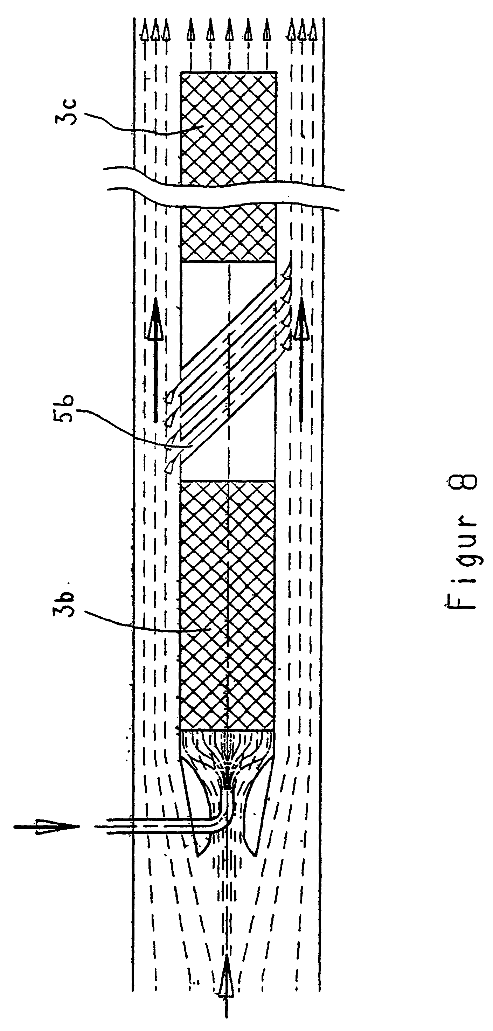

Nach Figur 8 ist der Kreuzstromwärmetauscher zwischen zwei Reaktoren 3a, 3b angeordnet Der Vorteil besteht in der billigeren Herstellung. Die Reaktoren 3a, 3b bleiben unverändert, da die Bohrungen 5b in den Zwischenraum eingebracht werden.

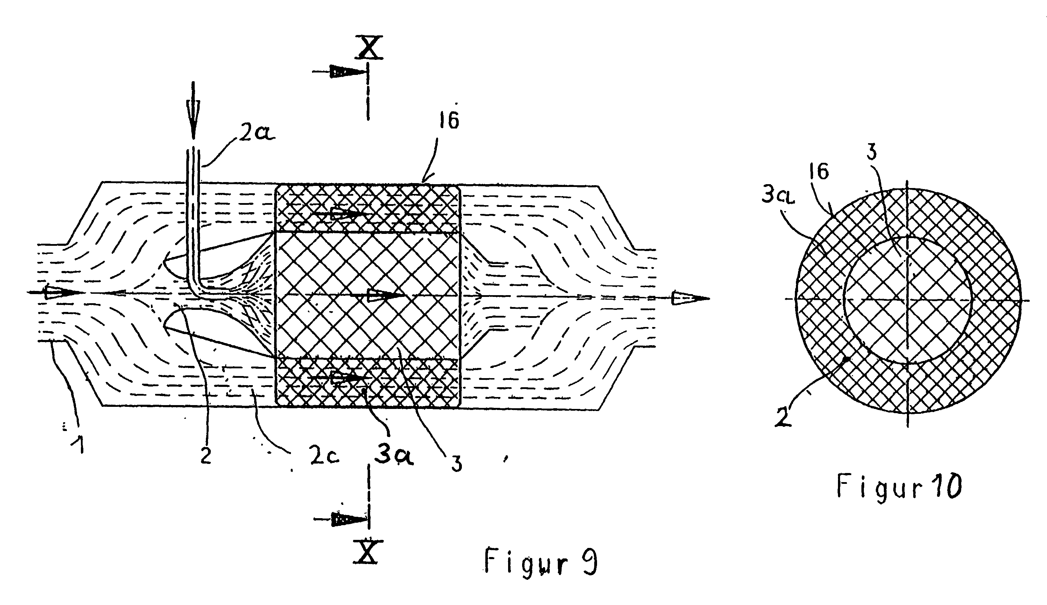

Ein besonders vorteilhaftes Verfahren ergibt sich nach Figur 9 durch die Kombination des Reaktors 3 zur Erzeugung von NH3 mittels der schon beschriebenen Harnstoffhydrolyse und einem Katalysator 3a zur Erzeugung von NO2. Das im Hauptstrom 2c im Abgas befindliche NOx hat nur einen Anteil von ca 5 - 10 % $NO_2$, der Rest ist NO.

[0026] Es hat sich gezeigt, daß $NO_2$ wesentlich schneller mit NH3 reagiert als NO. Erfindungsgemäß wird daher in den Abgasstrang 1 ein Gehäuse 16 eingebaut, in welchem der Reaktor 3 zentral untergebracht ist, während im Ringraum zwischen Reaktor 3 und Gehäuse 16 ein platinhaltiger Katalysator 3a angeordnet ist. Mit dem Rohr 2a wird in den Teilstrom 2 Harnstoff eingebracht der sich im Reaktor 3 zu NH3 umsetzt. Im umgebenden Katalysator 3a wird NO mit dem im Abgas enthaltenen Restsauerstoff zu $NO_2$ aufoxidiert. Der Anteil an $NO_2$ ist nach Verlassen des Katalysators 3a von 5 - 10 % auf ca. 50 % gestiegen. Anschließend werden der Hauptstrom 2c und der Teilstrom 2 vereinigt. In nachgeschalteten SCR-Katalysator 4 (Fig. 1) erfolgt eine effiziente Umsetzung von $NO_2$ und $NH_3$, wobei $NO_2$ zu $N_2$ reduziert wird.

Einen Querschnitt X-X zeigt Fig. 10. Der zentral angeordnete Reaktor 3 wird vom Haupt-strom 2 umspült und beheizt. Der Katalysator 3a zur Erzeugung von $NO_2$ aus NO ist im Ringraum zwischen Reaktor 3 und Gehäuse 16 angeordnet.

Besonders bei der Verwendung von Harnstoff-Wasser-Lösung bietet sich die Möglichkeit an, das Wasser durch Mikrowellen, also elektromagnetische Wellen, zu verdampfen, so daß nur noch die Reaktionsenthalpie für die Harnstoffhydrolyse aufgebracht werden muß.

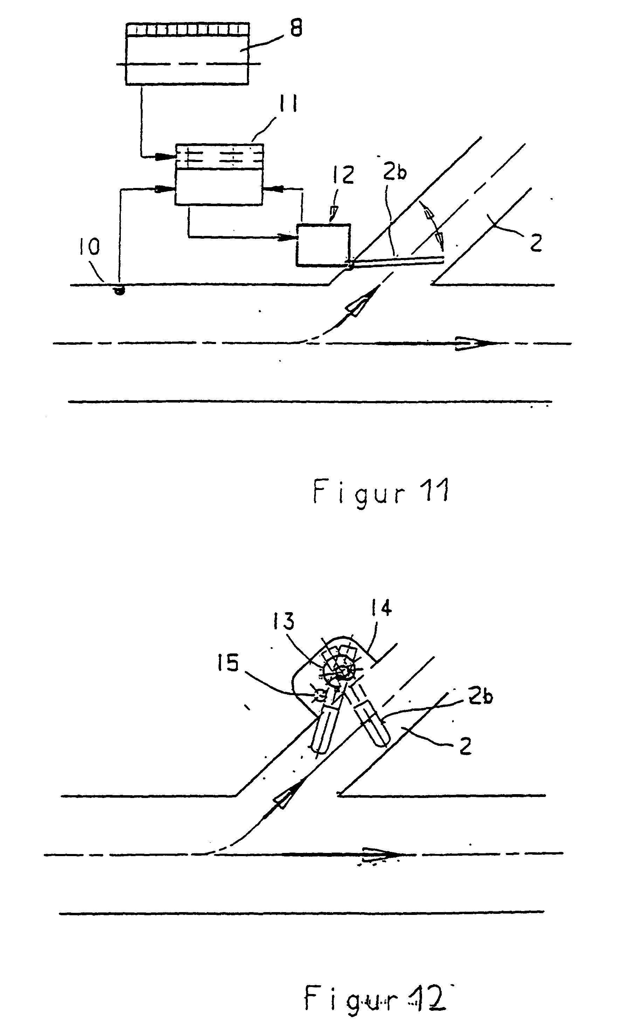

Soll die durch den Hydrolysekatalysator geführte Abgasmasse auch bei starken Schwankungen von Abgasmasse und -temperatur optimal an das Umsetzungsvermögen des Katalysators angepaßt werden, so kann dies durch eine Veränderung der aus dem Gesamtabgasstrom entnommene Teilstrom 2 mit Hilfe einer Drosselvorrichtung 2b (Figur 1) und Regelvorrichtung erreicht werden. Ein Ausfilhrungsbeispiel ist in den Figuren 11 und 12 gegeben: Die für jeden Betriebszustand der Brennkraftmaschine optimale Abgasmasse bei bestimmten Katalysatortemperaturen kann im Labor oder an einer Referenzbrennkraftmaschine ermittelt und diese Werte dann in Kennfeldern abgelegt werden. Während des Betriebs wird nach Figur 11 die jeweilige Abgasgeschwindigkeit und/oder -temperatur und/oder Abgasdruck aus Werten, die ein elektronisches Motorsteuergerät 8 liefert und/oder aus Sensoren 10 bestimmt. In Verbindung mit den abgelegten Kennfeldern wird dann mit Hilfe eines elektronischen Steuergerätes 11 die optimale Drosselklappenstellung ermittelt und mit Hilfe eines Antriebselements 12 eingeregelt. Werden große Abgasmassenströme durch den Reaktor 3 ( Figur 1) angestrebt, so wird die Drosselklappe 2b so angestellt, daß ein großer Anteil des Gesamtabgases als Teilstrom 2 durch den Reaktor geleitet wird, während bei niedrigen die Drosselklappe 2b den freien Querschnitt des Teilstromkanal verkleinert und somit den durch den Reaktor geleiteten Teilstrom verringert. Da durch die Steuerung des Abgasmassenstromes durch den Reaktor stets dessen optimaler Betriebspunkt bei gegebener Abgastemperatur eingestellt werden kann, ist eine weitere Verkleinerung des Reaktors realisierbar. Im stark instationären Betrieb kann zusätzlich eine Korrektur über die Laständerungsgeschwindigkeit erfolgen.

Will man auf eine elektronische Regelung und externe Antriebselemente verzichten, so ist es nach Figur 12 auch möglich, die Drosselklappe 2b so auszulegen, daß sich ihre Stellung im Teilstrom 2 je nach Strömungszustand selbständig ändert. An der Drosselklappe 2b ist eine Vorrichtung angebracht, zweckmäßigerweise eine Feder 13, die der durch die Strömung auftretenden Kraft entgegenwirkt, so daß durch das sich einstellende Kräftegleichgewicht eine definierte Drosselklappenstellung ergibt. Die Feder 13, die einerseits mit der beweglich gelagerten Drosselklappe 2b und andererseits mit der Kanalwand 14 verbunden ist, wird entsprechend vorgespannt Ist die Strömungsgeschwindigkeit Null, wird die Drosselklappe 2b durch die Federkraft gegen eine Sperre 15 gedrückt. Bei zunehmender Abgasströmung wird die Drosselklappe 2b ausgelenkt und somit der freie Querschnitt verringert, es stellt sich ein Gleichgewicht zwischen der durch den Strömungswiderstand induzierten Kraft und der Rückstellkraft der Feder 13 ein.

## Patentansprüche

1. Verfahren zur thermischen Hydrolyse und Dosierung von Harnstoff, bzw. wässriger Harnstofflösung in einem Reaktor (3) unter Zuhilfenahme des Abgases einer Brennkraftmaschine, wobei der Harnstoff vor dem Reaktor (3) über ein Rohr (2a) dem Abgas dosiert beigemengt wird und als Produkt der Hydrolyse $NH_3$ + $CO_2$ gebildet werden und das $NH_3$ der Reduktion von $NO_x$ in einem nachgeschalteten SCR-Katalysator (4) dient, **dadurch gekennzeichnet, daß** einem Abgasstrang (1) stromauf des SCR-Katalysators (4) ein Teilstrom (2) des Abgases entnommen und über eine Drosseleinrichtung durch den Reaktor (3) geleitet wird, und daß der nach der Hydrolyse den Reaktor (3) verlassende, mit $NH_3$ und $CO_2$ beladene Teilstrom (2) stromauf des SCR-Katalysators (4) wieder in den Abgasstrang (1) eingeleitet und schließend mit dem Abgashauptstrom vereinigt durch den SCR-Katalysator (4) geleitet wird.

2. Verfahren nach Anspruch 1, **dadurch gekennzeichnet, daß** die in Verbindung mit einer Referenz-Brennkraftmaschine ermittelten maschinenspezifischen Werte für die Abgasmenge und/oder Abgastemperatur und/oder Abgasdruck für die Bestimmung der in jedem Betriebszustand optimalen Menge des Teilstromes (2) herangezogen und danach diese Menge eingeregelt wird.

3. Verfahren nach Anspruch 2, **dadurch gekennzeichnet, daß** im stark instationären Betrieb eine Korrektur der entnommenen Teilstrommenge über die Laständerungsgeschwindigkeit, z.B. ermittelt aus der Einspritzmengen-, Gaspedalstellungs- oder Ladeluftdruckänderung und/oder aus Abgastemperaturschwankungen und/oder aus $NO_x$-Konzentrationsänderungen, entweder aus Kennfel-

dern bestimmt oder durch Sensoren (11) gemessen, erfolgt.

4. Verfahren nach Anspruch 1, **dadurch gekennzeichnet, daß** die Hydrolyse an einem katalytisch beschichteten Reaktor (4) erfolgt.

5. Verfahren nach Anspruch 1, **dadurch gekennzeichnet, daß** ein Hauptstrom (2c) des Abgases über einen platinhaltigen Katalysator (3a) geführt wird, der das im Abgas enthaltene NO mit Hilfe des im Abgas enthaltenen Restsauerstoffs zu $NO_2$ auf-oxidiert, daß der vom Hauptstrom (2c) abgezweigte und zu diesem parallel geführte Teilstrom (2) zum Zwecke der Hydrolyse von Harnstoff durch den Reaktor (3) geleitet wird, daß der Hauptstrom (2c) und der Teilstrom (2) zur Reduktion des im Katalysator (3a) gebildeten $NO_2$ mit Hilfe des im Reaktor (3) gebildeten $NH_3$ wieder vereinigt werden, und daß die Reduktion von $NO_2$ mit $NH_3$ in dem stromab nachgeschalteten SCR-Katalysator (4) erfolgt.

6. Vorrichtung zur Durchführung des Verfahrens nach einem der Ansprüche 1 bis 4, **dadurch gekennzeichnet, daß** die Regelung der Teilstrommenge über eine mit Hilfe von Antriebselementen (12) angesteuerte Drosselklappe (2b) erfolgt.

7. Vorrichtung zur Durchführung des Verfahrens nach einem der Ansprüche 1 bis 4, **dadurch gekennzeichnet, daß** durch eine spezielle Lagerung und Formgebung der Drosselklappe (2b) die Regelung der Teilstrommenge durch die Strömung selbst erfolgt.

8. Vorrichtung zur Durchführung des Verfahrens nach einem der Ansprüche 1 bis 4, **dadurch gekennzeichnet, daß** der Reaktor (3) thermisch in den Hauptabgasstrom eingebunden ist, wobei der Wärmeübergang durch Heizrippen (5) und/oder strukturierte Oberflächen verbessert werden kann.

9. Vorrichtung zur Durchführung des Verfahrens nach Anspruch 5, **dadurch gekennzeichnet, daß** in den Abgasstrang (1) ein Gehäuse (16) eingebaut ist, in dessen Zentrum sich der Reaktor (3) befindet, daß im Ringraum zwischen Reaktor (3) und Gehäuse (16) ein platinhaltiger Katalysator (3a) vorgesehen ist, der den Hauptstrom (2c) aufnimmt, während der Teilstrom (2) durch den Reaktor (3) geleitet wird und über ein Rohr (2a) Reduktionsmittel, beispielsweise Harnstoff in den Reaktor (3) eingebracht wird.

10. Vorrichtung nach den Ansprüchen 6 bis 8, **dadurch gekennzeichnet, daß** das Verhältnis Reaktorlänge zu Reaktorquerschnitt größer als 10 ist und so ein direkter Einbau des Reaktors (3) in den Abgasstrang (1) möglich wird.

11. Vorrichtung nach den Ansprüchen 6 bis 8, **dadurch gekennzeichnet, daß** der Reaktor (3) selbst als Wärmetauscher ausgelegt wird, der dem Hauptabgasstrom Wärme entzieht und der Wärmetauscher aus Bohrungen (5a) gebildet wird, welche den Reaktor 3 konzentrisch zu seiner Achse in Längsrichtung durchdringen.

12. Vorrichtung nach den Ansprüchen 6 bis 8, **dadurch gekennzeichnet, daß** die Erwärmung des Teilstromes (2) durch den Hauptstrom in einzelnen kleinen Reaktoren (3a bis 3c) geschieht und die Hydrolyseprodukte bereits zwischen den einzelnen Reaktoren (3a bis 3c) dem Hauptstrom zugemischt werden.

13. Vorrichtung nach den Ansprüchen 6 bis 8, **dadurch gekennzeichnet, daß** der Reaktor (3) selbst als Wärmetauscher ausgebildet ist und der Wärmetauscher aus Kanälen (5b) gebildet wird, welche den Reaktor (3) schräg zur Richtung des Teilstromes (2) durchdringen und so Wärme aus dem Abgasstrang (1) auf den Teilstrom (2) übertragen wird.

14. Vorrichtung nach den Ansprüchen 6 bis 8, **dadurch gekennzeichnet, daß** der Wärmetauscher zwischen zwei Reaktoren (3a, 3b) angeordnet ist und der Wärmetauscher aus Kanälen (5b) gebildet wird, welche den Raum zwischen den Reaktoren (3a, 3b) schräg zur Richtung des Teilstromes (2) durchdringen und so Wärme aus dem Abgasstrang (1) auf den Teilstrom (2) übertragen wird.

15. Vorrichtung zur Durchführung des Verfahrens nach Anspruch 1, **dadurch gekennzeichnet, daß** der Teilstrom (2) elektrisch beheizt wird.

16. Vorrichtung zur Durchführung des Verfahrens nach Anspruch 1, **dadurch gekennzeichnet, daß** der Reaktor (3) elektrisch beheizt wird.

17. Vorrichtung zur Durchführung des Verfahrens nach Anspruch 1, **dadurch gekennzeichnet, daß** dem Teilstrom (2) elektromagnetische Energie in Form von elektromagnetischen Wellen zugeführt wird.

**Claims**

1. A method for the thermal hydrolysis and metering of urea, or aqueous urea solution, in a reactor (3) with the aid of the exhaust gas of an internal combustion engine, wherein the urea is added in metered amounts to the exhaust gas before the reactor (3) by way of a pipe (2a) and $NH_3 + CO_2$ are formed as product of the hydrolysis and the $NH_3$ serves to reduce $NO_x$ in an SCR catalytic converter (4) connected thereafter, **characterised in that** a side stream (2) of the exhaust gas is withdrawn from an exhaust gas line (1) upstream of the SCR catalytic converter (4) and is directed via a throttle device through the reactor (3), and **in that** the side stream (2) leaving the reactor (3) after the hydrolysis and laden with $NH_3$ and $CO_2$ is directed into the exhaust gas line (1) again upstream of the SCR catalytic converter (4) and, combined with the main exhaust gas stream, is then directed through the SCR catalytic converter (4).

2. A method according to Claim 1, **characterised in that** the engine-specific values, ascertained in connection with a reference internal combustion engine, for the exhaust gas quantity and/or exhaust gas temperature and/or exhaust gas pressure [are][1] used to determine the optimum quantity of the side stream (2) in every operating state, and this quantity is adjusted accordingly.

3. A method according to Claim 2, **characterised in that**, in highly intermittent operation, correction of the withdrawn side stream quantity is effected via the load change speed, ascertained, for example, from the injection quantity change, the accelerator pedal position change or the charge air pressure change and/or from exhaust gas temperature variations and/or $NO_x$ concentration changes, either determined from characteristic maps or measured by means of sensors (11).

4. A method according to Claim 1, **characterised in that** the hydrolysis takes place at a catalytically coated reactor (4).

5. A method according to Claim 1, **characterised in that** a main stream (2c) of the exhaust gas is guided via a platinum-containing catalytic converter (3a) which further oxidises the NO contained in the exhaust gas with the aid of the residual oxygen contained in the exhaust gas to form $NO_2$, **in that** the side stream (2) diverted from the main stream (2c) and guided parallel thereto is directed through the reactor (3) for the purpose of hydrolysing urea, **in that** the main stream (2c) and the side stream (2) are combined again to reduce the $NO_2$ formed in the catalytic converter (3a) with the aid of the $NH_3$ formed in the reactor (3), and **in that** the reduction of $NO_2$ with $NH_3$ is effected in the SCR catalytic converter (4) connected downstream.

6. A device for implementing the method according to one of Claims 1 to 4, **characterised in that** the regulation of the side stream quantity is effected via a throttle valve (2b) controlled with the aid of drive elements (12).

7. A device for implementing the method according to one of Claims 1 to 4, **characterised in that**, through special mounting and shaping of the throttle valve (2b), the regulation of the side stream quantity is effected by means of the flow itself.

8. A device for implementing the method according to one of Claims 1 to 4, **characterised in that** the reactor (3) is connected thermally into the main exhaust gas stream, it being possible to improve the heat transfer by means of heating ribs (5) and/or structured surfaces.

9. A device for implementing the method according to Claim 5, **characterised in that** a housing (16) is installed in the exhaust gas line (1), in the centre of which is located the reactor (3), **in that** a platinum-containing catalytic converter (3a) is provided in the annular space between the reactor (3) and the housing (16), which receives the main stream (2c), while the side stream (2) is directed through the reactor (3), and reducing agent, for example urea, is introduced into the reactor (3) via a pipe (2a).

10. A device according to Claims 6 to 8, **characterised in that** the ratio of reactor length to reactor cross-section is greater than 10 and thus directly installing the reactor (3) in the exhaust gas line (1) becomes possible.

11. A device according to Claims 6 to 8, **characterised in that** the reactor (3) is itself designed as a heat exchanger which draws heat from the main exhaust gas stream and the heat exchanger is formed from bores (5a) which penetrate the reactor 3 [sic, recte (3)] concentrically to its axis in the longitudinal direction.

12. A device according to Claims 6 to 8, **characterised in that** the heating of the side stream (2) by the main stream occurs in individual small reactors (3a to 3c) and the hydrolysis products are already admixed into the main stream between the individual reactors (3a to 3c).

13. A device according to Claims 6 to 8, **characterised in that** the reactor (3) is itself designed as a heat exchanger and the heat exchanger is formed from channels (5b) which penetrate the reactor (3) obliquely to the direction of the side stream (2) and thus heat is transferred from the exhaust gas line (1) to the side stream (2).

14. A device according to Claims 6 to 8, **characterised in that** the heat exchanger is arranged between two reactors (3a, 3b) and the heat exchanger is formed from channels (5b) which penetrate the space between the reactors (3a, 3b) obliquely to the direction

[1]Plural verb omitted in the source document.

of the side stream (2) and thus heat is transferred from the exhaust gas line (1) to the side stream (2).

**15.** A device for implementing the method according to Claim 1, **characterised in that** the side stream (2) is electrically heated.

**16.** A device for implementing the method according to Claim 1, **characterised in that** the reactor (3) is electrically heated.

**17.** A device for implementing the method according to Claim 1, **characterised in that** electromagnetic energy in the form of electromagnetic waves is supplied to the side stream (2).


**Revendications**

**1.** Procédé d'hydrolyse thermique et de dosage de l'urée, ou d'une solution d'urée aqueuse dans un réacteur (3) à l'aide du gaz d'échappement d'un moteur à combustion interne, en ajoutant l'urée par doses au gaz d'échappement avant le réacteur (3) par l'intermédiaire d'un tube (2a) pour former du $NH_3$ + $CO_2$ comme produits de l'hydrolyse, le $NH_3$ servant à la réduction du $NO_x$ dans un catalyseur SCR (Selective Catalytic Reaction) situé en aval, **caractérisé en ce qu'** un flux partiel (2) du gaz d'échappement est prélevé à un circuit d'échappement (1) en amont du catalyseur SCR (4) et conduit à travers le réacteur (3) par un dispositif d'étranglement, et le flux partiel (2) quittant le réacteur (3) après l'hydrolyse et chargé en $NH_3$ et $CO_2$ est réintroduit dans le circuit d'échappement (1) en amont du catalyseur SCR (4) puis conduit, réuni au flux d'échappement principal, à travers le catalyseur SCR (4).

**2.** Procédé selon la revendication 1, **caractérisé en ce que** les valeurs spécifiques au moteur, déterminées en liaison avec un moteur à combustion interne de référence, de la quantité de gaz d'échappement et/ou la température du gaz d'échappement et/ou de la pression du gaz d'échappement, sont extraites pour déterminer la quantité optimale de flux partiel (2) dans chaque état de fonctionnement, et on ajuste ensuite cette quantité.

**3.** Procédé selon la revendication 2, **caractérisé en ce que** lors d'un fonctionnement très instationnaire, une correction de la quantité de flux partiel prélevé est réalisée par le biais de la vitesse de modification de la charge, par exemple déterminée à partir de la modification de la quantité injectée, de la position de la pédale d'accélération ou de la pression d'air de suralimentation et/ou des variations de la température du gaz d'échappement et/ou des modifications de la concentration en $NO_x$, soit déterminée à partir de champs caractéristiques soit mesurée par des capteurs (11).

**4.** Procédé selon la revendication 1, **caractérisé en ce que** l'hydrolyse est réalisée sur un réacteur revêtu par voie catalytique.

**5.** Procédé selon la revendication 1, **caractérisé en ce qu'** un circuit principal (2c) du gaz d'échappement passe par un catalyseur contenant du platine (3a) qui oxyde en $NO_2$ le NO contenu dans le gaz d'échappement à l'aide de l'oxygène restant contenu dans le gaz d'échappement, le flux partiel (2) dévié du flux principal (2c) et parallèle à celui-ci passe par le réacteur (3) afin d'hydrolyser l'urée, le flux principal (2c) et le flux partiel (2) sont à nouveau réunis pour réduire le $NO_2$, formé dans le catalyseur (3a), à l'aide du $NH_3$ formé dans le réacteur (3), et la réduction de $NO_2$ avec du $NH_3$ est réalisée dans le catalyseur SCR (4) placé en aval.

**6.** Dispositif permettant de réaliser le procédé selon l'une quelconque des revendications 1 à 4, **caractérisé en ce que** la quantité de flux partiel est régulée par l'intermédiaire d'un papillon des gaz (2b) commandé à l'aide d'organes d'entraînement (12).

**7.** Dispositif permettant de réaliser le procédé selon l'une quelconque des revendications 1 à 4, **caractérisé en ce que** la quantité de flux partiel est régulée par l'écoulement lui-même grâce à un positionnement et une forme spécifiques du papillon des gaz (2b)

**8.** Dispositif permettant de réaliser le procédé selon l'une quelconque des revendications 1 à 4, **caractérisé en ce que** le réacteur (3) est intégré thermiquement au flux d'échappement principal, le transfert de chaleur pouvant être amélioré par des ailettes chauffantes (5) et/ou des surfaces structurées.

**9.** Dispositif permettant de réaliser le procédé selon la revendication 5, **caractérisé en ce que** dans le circuit d'échappement (1), est disposé un carter (16) au centre duquel se trouve le réacteur (3), et dans l'espace annulaire entre le réacteur (3) et le carter (16) un catalyseur contenant du platine (3a) absorbe le flux principal (2c) alors que le flux partiel (2) passe par le réacteur, et un agent de réduction, par exemple de l'urée, est introduit dans le réacteur (3) par l'intermédiaire d'un tube (2a).

10. Dispositif selon les revendications 6 à 8, **caractérisé en ce que**
le rapport entre la longueur du réacteur et la section du réacteur est supérieur à 10 permettant ainsi de placer le réacteur (3) directement dans le circuit d'échappement (1).

11. Dispositif selon les revendications 6 à 8, **caractérisé en ce que**
le réacteur (3) lui-même est conçu comme un échangeur de chaleur, qui prélève de la chaleur au flux d'échappement principal, et l'échangeur de chaleur est formé d'alésages (5a) qui traversent le réacteur (3) concentriquement à son axe dans le sens longitudinal.

12. Dispositif selon les revendications 6 à 8, **caractérisé en ce que**
le flux partiel (2) est réchauffé par le flux principal dans différents petits réacteurs (3a à 3c), et les produits de l'hydrolyse sont déjà mélangés au flux principal entre les différents réacteurs (3a à 3c).

13. Dispositif selon les revendications 6 à 8, **caractérisé en ce que**
le réacteur (3) lui-même est en forme d'échangeur de chaleur et l'échangeur de chaleur est formé de canaux (5b) qui traversent le réacteur (3) en diagonale en direction du flux partiel (2) permettant ainsi de transférer de la chaleur du circuit d'échappement (1) au flux partiel (2).

14. Dispositif selon les revendications 6 à 8, **caractérisé en ce que**
l'échangeur de chaleur est disposé entre deux réacteurs (3a, 3b) et l'échangeur de chaleur est formé de canaux (5b) qui traversent l'espace entre les réacteurs (3a, 3b) en diagonale en direction du flux partiel (2). permettant ainsi de transférer de la chaleur du circuit d'échappement (1) au flux partiel (2).

15. Dispositif permettant de réaliser le procédé selon la revendication 1, **caractérisé en ce que**
le flux partiel (2) est chauffé électriquement.

16. Dispositif permettant de réaliser le procédé selon la revendication 1, **caractérisé en ce que**
le réacteur (3) est chauffé électriquement.

17. Dispositif permettant de réaliser le procédé selon la revendication 1, **caractérisé en ce que**
le flux partiel (2) reçoit de l'énergie électromagnétique sous forme d'ondes électromagnétiques.

Figur 1

EP 1 052 009 B1

Figur 3

Figur 2

Figur 4

Figur 5

Figur 6

Figur 7

Figur 8

EP 1 052 009 B1

Figur 10

Figur 9

Figur 11

Figur 12